# EUROPEAN PATENT APPLICATION

(11) **EP 2 624 552 A1**
(43) Date of publication of application: **07.08.2013**
(21) Application number: 11829075.8
(22) Date of filing: 27.09.2011
(51) Int. Cl.: H04N 7/18, B60R 1/00, E02F 9/24, E02F 9/26

(54) **PERIMETER SURVEILLANCE DEVICE FOR WORK MACHINE**

(30) Priority: 29.09.2010 JP 2010218156
(71) Applicant: Hitachi Construction Machinery Co., Ltd., Bunkyo-ku Tokyo 112-0004 (JP)
(72) Inventor: ISHIMOTO, Hidefumi, Tsuchiura-shi Ibaraki 300-0013 (JP)
(74) Representative: Beetz & Partner
(86) International application number: PCT/JP2011/071979
(87) International publication number: WO 2012/043522

(57) **Abstract**

Aback camera 13B, left-side and right-side cameras 13L and 13R, and a front camera 13F are provided on an upper swiveling body 3. By converting viewpoints of camera images obtained by the cameras 13B, 13L, and 13R, individual over view images are generated and are combined with one another to form a surveillance panorama image disposed around a display character 21. The surveillance panorama image is displayed, together with a camera image, which is an image obtained by the front camera 13F, in an image display section 20a of a monitor 20. By appropriately operating switches SW1 through SW5 provided in an operation panel section 20b, a camera image which has not been converted into one of the individual over view images is displayed in an enlarged state.

## Description

### Technical Field

The present invention relates to a device for surveying surround of a working machine, such as a hydraulic excavator, etc., to survey for ensuring for the purpose of safety, etc. for conducting work by using the working machine.

### Background Art

A hydraulic excavator, which is an example of working machines, is a self-propelled working machine, and includes a base carrier having a crawler or wheel carriage. An upper swiveling body is installed on the base carrier by way of a swiveling unit. The upper swiveling body is provided with a working mechanism that conducts work, such as excavating landside. The working mechanism includes a boom which is connected to the upper swiveling body such that the boom is able to move up and down, and an arm attached to the forward end of the boom such that the arm is vertically pivotable. A bucket for conducting work, such as excavating landside, is attached, as a front attachment, to the forward end of the arm by way of a link mechanism. These components form a multiple-joint working mechanism.

A self-propelled working machine, such as a hydraulic excavator, provided with a surveillance mechanism for surveyring around the upper swiveling body in order to ensure the safety for working and to improve the operability of the working machine is known. This surveillance mechanism is constituted by a camera attached to the upper swiveling body and a monitor installed at a position in front of a driver's seat in a cabin at which an operator sits. Images taken by the camera are displayed on the monitor as moving picture.

The camera is fixed to the upper swiveling body, and the range of the viewing angle of the camera is limited. A working machine having the following configuration is known. Around a working machine where the operator needs a view of the front position where work is conducted and also needs a view of the back position and the right and left sides of the upper swiveling body in order to ensure the safety for operating the machine, etc., a plurality of cameras are provided for an upper swiveling body for the purpose of obtaining a widest possible viewing angle around the working machine. With this configuration, blind areas are eliminated almost all around the upper swiveling body, thereby ensuring the safety for work and improving the operability of the working machine.

Generally, camera images around a working machine obtained by a plurality of cameras do not show simultaneously on a monitor together, and instead, but one of camera images is selectively displayed when necessary. The selection of a camera image displayed on the monitor is performed through an operation of an operator. So as to select a desired image among images obtained by the individual cameras, generally, a selector switch is provided on the monitor or in a remote controller, etc., and the operator manually operates the selector switch and thereby displays a desired image.

However, since a plurality of cameras are installed, the operator may have to operate the selector switch a plurality of times before a desired image is displayed, and it may take time for the operator to perform an image switching operation. Additionally, the operator has to switch the monitor while operating the working machine. Thus, the operability of this image switching operation is not high.

In view of the above-described points, Patent Literature 1 discloses a technique in which camera images are sequentially switched so as to eliminate the need to perform an operation for switching between the camera images, etc. In Patent Literature 1, not only all camera images are sequentially displayed, but also a switching procedure can be changed and a skip setting can be set in which some camera images are skipped so that they are not displayed.

Sometimes, it is difficult to determine exact distances from camera images. For example, when performing an operation for swiveling the upper swiveling body, the operator checks the safety around the working machine. If a working person exists near the working machine or if there is an obstacle, such as a structure, near the working machine, it may be difficult to determine exactly, only from camera images, whether the working machine will contact the working person or the structure when operating the upper swiveling body. Additionally, when backward moving the base carrier, it may be difficult to accurately understand to which extent the working machine is approaching the working person or the structure, or to recognize the presence or the position of a depression, such as a ditch. When swiveling or backward moving of the working machine, there may be, around the working machine, an object with which the working machine has to avoid colliding or an object which has to be stopped from advancing. In this case, if the operator uses only camera images for conducting surveillance around the working machine, although the operator can recognize the presence or the absence of an object to be avoided of a type described above and the shape and the size thereof, it may be difficult to determine an exact distance from the working machine to such an object.

If a picture is taken by directing the viewpoint of a camera in the obliquely downward direction from a certain altitude, and if an obtained camera image is subjected to image conversion processing, an image looked from a virtual viewpoint can be obtained. As a virtual viewpoint image, a viewpoint image from an upper position having a viewpoint at a top is an over view image looked from above. If this over view image is displayed on a monitor, exact distance from a working machine to an object to be avoided can be determined. A device for conducting surveillance around a working machine by displaying over view images is disclosed in, for example, Patent Literature 2. In Patent Literature 2, a camera is installed at a predetermined position on the back side of a hydraulic excavator, which is an example of a working machine, and a camera is installed at a predetermined position on the left side of the hydraulic excavator. The optical axes of these cameras are directed obliquely downward, and images having a wide viewing angle in the backward and in the side direction are obtained. Then, viewpoint conversion is performed for converting these images into over view images having a top viewpoint, and the over view images are displayed on a monitor. As a result, a surveillance screen is obtained.

By displaying over view images on the monitor as described above, the exact distance from an upper swiveling body to an object to be avoided can be determined. Accordingly, the operator is able to check whether or not to move backwardly or swinging can be performed with safety around the working machine by using the images displayed on the monitor. Additionally, in a hydraulic excavator, which is an example of a working machine, a working mechanism that conducts work, for example, excavating landside, etc. is installed at the right side of a cabin of an upper swiveling body. Thus, the view which would be obtained by the operator's naked eyes within the cabin is blocked by this working mechanism. Accordingly, a view is also necessary in this direction. This is the reason why a camera is provided not only at a position on the back side of the upper swiveling body, but also on the right side of the swiveling structure as described in Patent Literature 2.

### Citation List

### Patent Literature

PTL 1: Japanese Unexamined Patent Application Publication No. 2008-114814
PTL 2: International Publication No. WO2006/106685 Pamphlet

### Summary of Invention

### Technical Problem

An over view image having an upper viewpoint is an image generated as a result of performing image processing, and is not a real image. Accordingly, although an over view image is useful information for measuring a distance, it is not always easy to exactly understand the actual shape or size of an object displayed in the over view image. For example, depending upon whether an object to be avoided is movable one or fixed one, different measures can be taken. If an object to be avoided is movable, a warning may be issued or a working machine may be stopped operating for a certain time, thereby allowing the object to be retreated from a dangerous area. On the other hand, if an object to be avoided is fixed, the operator has to drive the working machine such that it can avoid the object. Moreover, if an object to be avoided is an obstacle, the working machine may be able to climb over the obstacle or may have to avoid it, depending on, for example, the height of the obstacle. It is not possible to make such determinations appropriately from an over view image. Moreover, even if there are uneven portions or tilting portions on the ground, they may not be reflected in an over view image.

An over view image is generated from a camera image which is obtained as a result of capturing an image of a subject by using a camera. From this camera image, various items of information, such as the shape, size, height, etc., of the subject, can be obtained. Accordingly, if this camera image is displayed on a monitor, the operator is able to recognize an image of a real object to be avoided, which is desirable in terms of conducting surveillance around the working machine. However, the monitor is installed in a limited space, that is, in a cabin of a working machine. Additionally, if the monitor positioned in front of the operator is too large, it may restrict the operator's view in front when the operator is checking the front position with the naked eyes through the windshield. Thus, it is not desirable to display an over view image and a camera image together at the same time.

The present invention has been made on the basis of the above-described points and it is an object of the present invention to obtain accurate information necessary for conducting surveillance around a working machine by a simple operation of an operator operating a surveillance mechanism. Solution to Problem

According to the present invention, for the purpose of achieving the above-stated objectives, there is provided a device for surveying surround of a working machine provided a plurality of cameras on said working machine, directions of respective camera views being adapted to convert by means of signal processing of respective camera images from top to downward direction to produce over view images on a a monitor display, said device comprising an image mixing unit to produce a composite over view images from individual over view images to show on said monitor display attained by said cameras and at least one switch to show on said monitor display at least one original camera image from one taken by one of cameras in place of one or more individual over view image.

For surveying around a working machine, at least a view of the backward of the working machine is necessary. In addition, if the working machine is a hydraulic excavator or a hydraulic crane, surveillance is also conducted for a view in the right-side direction since a working mechanism is generally provided on the right side of a cabin of the upper swiveling body. Concerning the left side of the cabin, it is difficult to obtain a view with the operator's naked eyes at least in the oblique back direction. Accordingly, a back camera that takes an image of a view at the back of the working machine and two side cameras that take an image of a view on the left side of the working machine and an image of a view on the right side of the working machine may be provided. Then, camera images obtained by using the back camera and the side cameras at corresponding positions are converted into over view images of the associated areas. There may be another blind area for the operator sitting on the cabin, and an area for such a blind area may be different depending on the positional relationship between the cabin and the working mechanism, etc. Accordingly, concerning the number of cameras installed and the positions at which the cameras are installed, a camera other than those described above may be provided. The position at which a camera is installed is an area which is a blind area for the operator, and is suitably set on the basis of an area where a view is required for ensuring the safety.

Concerning a front side of the cabin, since a view is obtained with the operator's naked eyes, it is not always necessary to obtain an over view image of the front side. However, it is still possible to obtain an over view image of the front side. In addition, although the operator is able to directly obtain a view of the front side, there may be a direction in which a blind area is created. For example, if there is a concavity spot in front of the machine, it may be difficult for the operator to check the bottom of the depression with the naked eyes. It may also be difficult to check the situation of the upward area of the working machine. Accordingly, a camera may be provided at the front portion of the cabin, and an assisted view may be obtained with this camera. In this case, a front camera image is displayed as it is without performing viewpoint conversion on the front camera image.

Camera images obtained by the individual cameras are converted into individual over view images, and the individual over view images are combined with one another to generate a composite over view image. Thus, the heights of all the cameras and the angles of the optical axes with respect to the horizontal level are set to be uniform. Moreover, even if there are some missing portions at a boundary between the back over view image and each of the right-side and left-side over view images, they can be ignored for the sake of safety if they are only negligible. However, it is still desirable that a continuous image is obtained by connecting the end portions of the individual over view images to each other. In order to obtain such an image, for example, both ends of the back over view image partially overlap the corresponding ends of the side over view images through image blending processing.

On the monitor, a composite overview image is displayed, and a space is created in the central front portion of the monitor. Accordingly, a camera is also installed at the front portion of the working machine, and an image obtained by this camera is displayed in this space. With this configuration, when checking the monitor for conducting work in the backward and opposite sides of a construction machine, it is possible to check the safety all around the working machine including a view in front of the machine.

A plan view of the working machine may be formed into a character image and may be displayed as a display character on the monitor. The composite overview image obtained as a result of synthesizing the individual over view images by using the image composite unit may be displayed as a composite surveillance panorama image around the display character, the composite overview image including a back over view image located at a back position based on the camera image obtained by the back camera and left-side and right-side over view images located at a left-side position and a right-side position based on the camera images obtained by the left-side and right-side cameras, respectively. Additionally, zones, such as a danger zone and an attention zone, may be suitably set in this panorama image.

Some of the over view images are converted into camera images by the switch. In this case, in order to allow the operator to recognize which area of a camera image is being displayed, the camera image is displayed such that the major part of the camera image and the major part of the over view image obtained by converting the viewpoint of this camera image are superposed on each other, thereby avoiding the operator from being confused. In this case, the camera image is displayed by switching the over view image to the camera image. In this case, the camera image may be displayed while the over view image can be seen through the camera image.

As the switch for converting an individual over view image into a original camera image and displaying the camera image, a switch that is manually operated by an operator is generally utilized. Alternatively, an automatic switch may be provided, or these switches may be used together. As a manual switch, selector switches are mainly provided. The monitor may include an image display section and an operation panel section, and the switches may be provided on the operation panel section. The operation panel section may be formed as an independent remote controller. As the monitor, a touch panel monitor may be used. Then, switching from an over view image into a camera image and switching from a camera image into an over view image may be manually performed. Alternatively, switching from an over view image into a camera image may be performed through a switching operation, and after the lapse of a predetermined time, the camera image may be returned to the over view image.

Switching of images may be performed in cooperation with an operation unit, such as an operation lever. For example, when swiveling the upper swiveling body rightward or leftward, an image obtained by a side camera positioned in the front of the swiveling direction may be switched. When moving the working machine backward direction, an image is automatically shifted to the back camera. Then, after elapsed a predetermined time completed the operation, the image may be returned to the original unsatisfactory image. If automatic switching in cooperation with the operation lever, etc., is implemented, it is desirable that manual switching is also implemented, as well as automatic switching.

### Advantageous Effects of Invention

During performing the surveillance around a working machine, camera images and over view images obtained by performing viewpoint converted from the original images are displayed such that the camera images and the over view images can be switched from each other. Then, an operator operating the working machine is able to obtain accurate information necessary for conducting surveillance around the working machine with a simple operation.

### Brief Description of Drawings

[Fig. 1] Fig. 1 is a front view illustrating a hydraulic excavator, which is an example of a working machine.
[Fig. 2] Fig. 2 is a plan view of Fig. 1.
[Fig. 3] Fig. 3 is a view illustrating the configuration of a monitor according to a first embodiment of the present invention.
[Fig. 4] Fig. 4 is a diagram illustrating a circuit configuration of an image processing apparatus.
[Fig. 5] Fig. 5 is a view illustrating another display mode of the monitor shown in Fig. 3.
[Fig. 6] Fig. 6 is a view illustrating a third display mode of the monitor shown in Fig. 3.
[Fig. 7] Fig. 7 is a view illustrating a fourth display mode of the monitor shown in Fig. 3.
[Fig. 8] Fig. 8 is a view illustrating the configuration of a monitor according to a second embodiment of the present invention.
[Fig. 9] Fig. 9 is a view illustrating the configuration of a monitor according to a third embodiment of the present invention.
[Fig. 10] Fig. 10 illustrates operating states of a selector switch shown in Fig. 9.
[Fig. 11] Fig. 11 is a view illustrating the configuration of a monitor according to a fourth embodiment of the present invention.
[Fig. 12] Fig. 12 is a view illustrating a circuit configuration of an image processing apparatus according to a fifth embodiment of the present invention.
[Fig. 13] Fig. 13 is a view illustrating a setting screen of a monitor according to the fifth embodiment of the present invention.

### Description of Embodiments

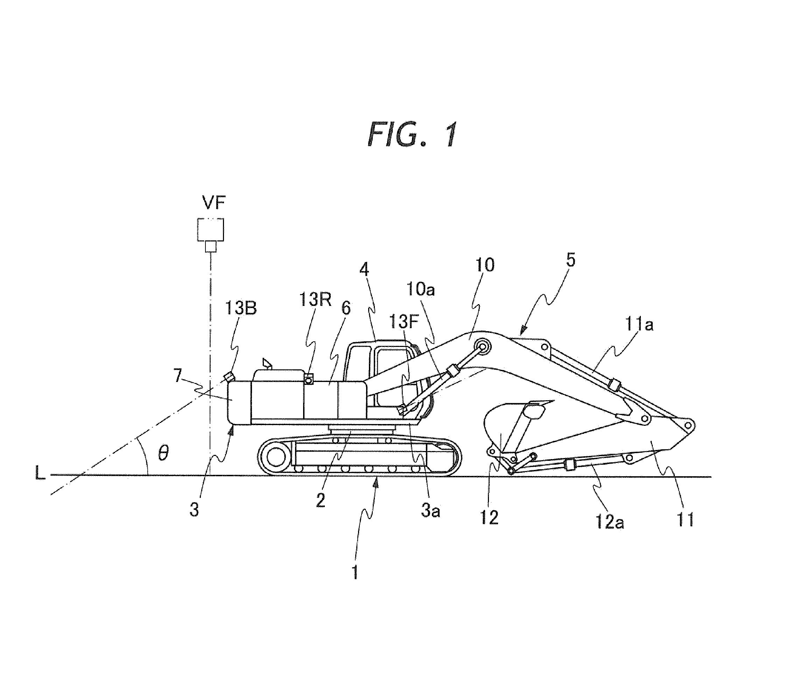

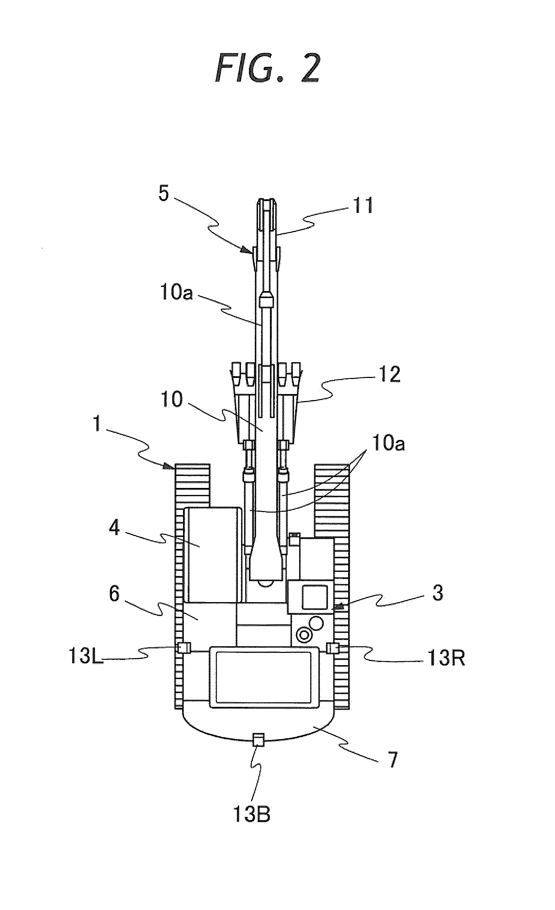

An embodiment of the present invention will be described hereinafrter with reference to the drawings. The configuration of a hydraulic excavator, which is an example of a working machine, is shown in Figs. 1 and 2. In the drawings, reference numeral 1 denotes a base carrier having a crawler carriage, and an upper swiveling body 3 is provided on the base carrier 1 by way of a swiveling unit 2.

In the upper swiveling body 3, a cabin 4 on which an operator sits and operates the machine is installed, and a working mechanism 5 for conducing work, for example, to excavate landslide, is also installed. The working mechanism 5 is located on the right side of the cabin 4 and at a position substantially parallel with the cabin 4. Additionally, in the upper swiveling body 3, a machine housing 6, etc. is provided at a position at the back of the cabin 4 and the working mechanism 5, and a counterweight 7 is provided at the tail end.

The working mechanism 5 is a excavating mechanism including a boom 10, an arm 11, and a bucket 12, which serves as a front attachment. The boom 10 is pivoted at its base end to a frame 3a of the upper swiveling body 3 by way of a coupling pin such that it is elevatable. The arm 11 is connected to the forward end of the boom 10 such that it is vertically pivotable. The bucket 12 is connected to the forward end of the arm 11 such that it is rotatable. The elevating operation of the boom 10 is performed by driving a boom cylinder 10a. The arm 11 and the bucket 12 are driven by an arm cylinder 11a and a bucket cylinder 12a, respectively.

In the hydraulic excavator as described above, an operator who operates this hydraulic excavator performs an operation while facing in front in the cabin 4, and a sufficiently wide view is secured for the front position of the upper swiveling body 3. A view is also secured in the oblique front direction on the left side of the cabin 4. However, in the oblique back direction on the left side, the operator has to look back in order to perform a visual check in that direction. On the right side of the cabin 4, because of the installation of the working mechanism 5, the boom 10 considerably blocks the operator's view, and it is substantially impossible to perform a visual check with the naked eyes. Concerning the back of the upper swiveling body 3, because of the presence of the machine housing 6 and the counterweight 7, the operator has to look back within the cabin 4 in order to obtain a view. Moreover, the top levels of the machine housing 6 and the counterweight 7 are high, and even if the operator looks back in the cabin 4, the position where the operator can view is at a far distance, and the operator is not able to check a position near the upper swiveling body 3.

Because of the above-described reasons, in order to implement surveillance in the back and the right-side and left-side directions of the upper swiveling body 3, camera 13B, 13R, and 13L, respectively, are installed to obtain assisted views. That is, the back camera 13B is installed at a position substantially in the middle of the right and left sides of the top surface of the counterweight 7. Moreover, the left-side camera 13L is installed on the top surface of the left side of the machine housing 6, and, at a position on the right side of the upper swiveling body 3, the right-side camera 13R is installed on the top surface of the machine housing 6 or a tank. The back camera 13B obtains images in a wide range at the back of the upper swiveling body 3. With the provision of the back camera 13B and the right-side and left-side cameras 13R and 13L, the view can be obtained substantially all around the machine, except for a view of the front of the machine that the operator can obtain without feeling uncomfortable in the cabin 4 of the upper swiveling body 3.

For implementing this configuration, the viewing angles of the lenses of the above-described cameras 13B, 13R, and 13L and the positions at which they are installed are set such that the horizontal viewing angles of the lenses at least partially overlap each other. This makes it possible to eliminate blind areas around the upper swiveling body 3. Concerning the front of the upper swiveling body 3, a view is obtained with the operator's naked eyes. However, as shown in Fig. 1, a front camera 13F is provided on a frame of the upper swiveling body 3, and with this front camera 13F, too, a view of the front position of the upper swiveling body 3 is obtained.

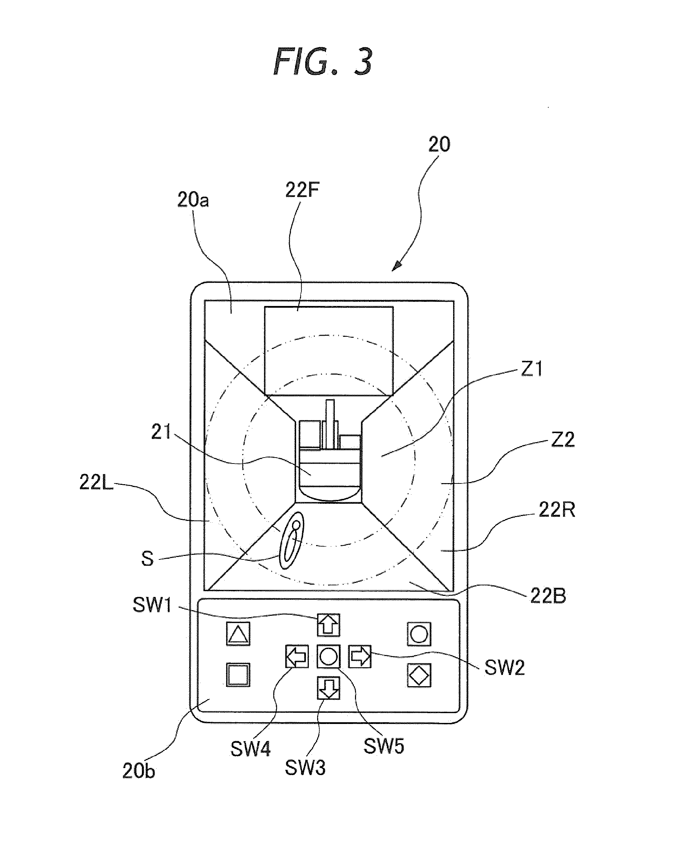

In the cabin 4, as shown in Fig. 3, a monitor 20 is set, and images obtained by the above-described cameras 13R through 13F are displayed on the monitor 20 as moving pictures. Camera images obtained by the front camera 13F are displayed on the monitor 20 without being processed. However, concerning camera images obtained by the back camera 13B and the right-side and left-side cameras 13R and 13L, instead of displaying the camera images without being processed, the viewpoints of the camera images are converted so that images having a top viewpoint are obtained.

That is, as shown in Fig. 1, the optical axis of an objective lens of the back camera 13B is directed in the obliquely downward direction at an angle of *θ* with respect to the back of the upper swiveling body 3. It is now assumed that a contact surface of the base carrier 1 of the hydraulic excavator is designated by L. Then, a camera image having an angle of *θ* with respect to the contact surface L is subjected to coordinate transform so as to create an image such that, as shown in the drawing, the optical axis from a virtual viewpoint VF to the contact surface L becomes vertical. With this operation, a camera image having an angle of *θ* taken from the obliquely upward direction can be converted into an over view image. This over view image can be displayed on the monitor 20. Concerning the right-side and left-side cameras 13R and 13L, as well as the back camera 13B, the tilting angle of the optical axis with respect to the contact surface L is *θ*. The front camera 13F serves the function of obtaining an assisted view of an area which is hard for the operator within the cabin 4 to see, and, in this embodiment, the optical axis of the front camera 13F is directed in the obliquely upward direction.

As described above, the cameras 13B, 13R, and 13L are camera for obtaining images for conducting surveillance around the machine, while the front camera 13F is a camera for obtaining an assisted view for the operator on operating the machine. Then, images for conducting surveillance around the machine constituted by over view images which are obtained as a result of performing coordinate transform on images obtained by the cameras 13B, 13R, and 13L, and camera images obtained by the front camera 13F, which is used for obtaining an assisted view, are displayed on the monitor 20.

The monitor 20 shown in Fig. 3 is constituted by an image display section 20a in which images are displayed and an operation panel section 20b including operation buttons, etc. In the image display section 20a, a plan view of the hydraulic excavator is displayed as a character at a central position of the image display section 20a. Around this display character 21, a back over view image 22B, a right-side over view image 22R, and a left-side over view image 22L which are obtained as individual over view images as a result of performing image processing on images obtained by the cameras 13B, 13R, and 13L, respectively, are displayed at associated positions. The over view images 22B, 22R, and 22L form a composite overview image. Thus, a panorama image is displayed around the display character 21. Moreover, a front view image obtained by the camera 13F is displayed at a position in front of the display character 21. This front image is a front camera image 22F, which is not subjected to processing for obtaining an over view image.

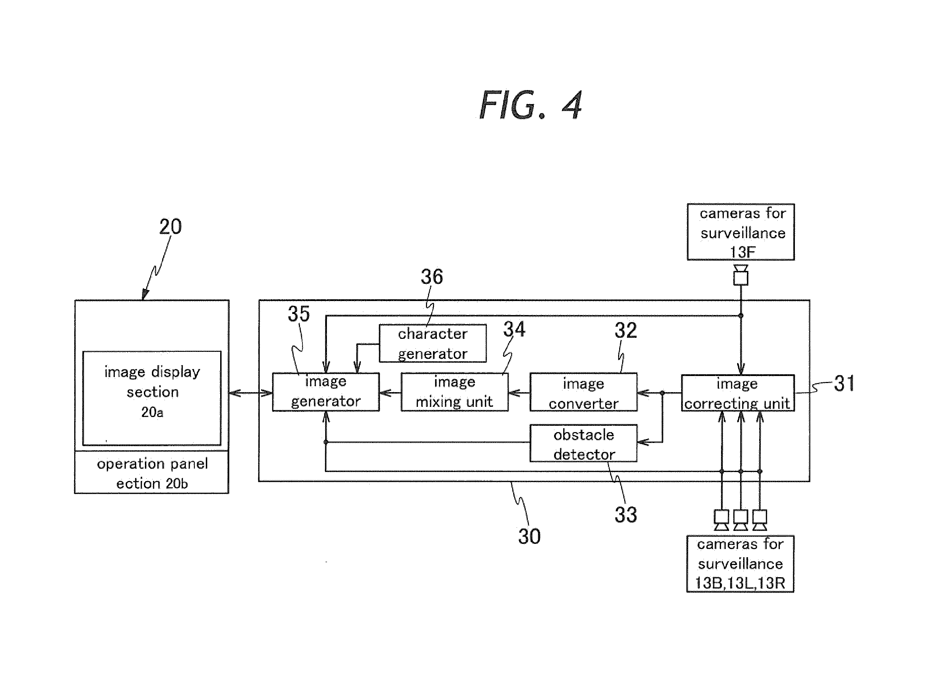

Fig. 4 illustrates a circuit configuration of an image processing apparatus 30. In the drawing, camera images taken by the cameras 13B, 13R, and 13L and camera images taken by the camera 13F are input into an image correcting unit 31. In this image correcting unit 31, input camera images are subjected to image correction, such as aberration correction, contrast correction, and color hue correction, on the basis of parameters of the camera optical system, etc., thereby improving the quality of the images.

At the output side of the image correcting unit 31, an image converter 32 and an obstacle detector 33 are provided in parallel and are connected to the image correcting unit 31. In the image converter 32, viewpoint conversion is performed so that individual camera images are converted into images having a top viewpoint. As a result, the individual back, left-side, and right-side over view images 22B, 22L, and 22R, respectively are generated. An image mixing unit 33 places these individual over view images 22B, 22L, and 22R, together with the front camera image 22F, which is a camera image, in predetermined areas of the image display section 20a of the monitor 20. In this case, the images are obtained such that the boundaries between the over view image 22B and the left-side and right-side over view images 22L and 22R partially overlap each other. Then, the image mixing unit 34 combines the overlapping portions through blending processing and thereby converts the individual over view images into a composite overview image. With this operation, the composite overview image is displayed such that it surrounds the display character 21, thereby forming, as a whole, a continuous panorama image.

As the front camera image 22F, a camera image is displayed without being processed. The over view images 22B, 22L, and 22R are obtained as a result of performing signal processing, and are not real images. Accordingly, although it is possible to recognize that objects are displayed in the over view images 22B, 22L, and 22R, they are deformed object images, and it may not be possible to accurately understand what the objects are. The obstacle detector 33 is connected, in parallel with the image converter 32, to the image correcting unit 31. Thus, the presence or the absence of obstacles (people, vehicles, structures, etc.) is detected on the basis of camera images obtained by the cameras 13B, 13R, and 13L and output from the image correcting unit 31, and if an obstacle is detected, information concerning what the obstacle is and the shape and the size of the object, etc. is obtained. This processing is performed by the obstacle detector 33.

At the output side of the image processing apparatus 30, a display image generator 35 is provided. A character generator 36 is connected to the display image generator 35, and the display character 21 is output from this character generator 36. In this case, the display character 21 is a hydraulic excavator, which is an example of a working machine, and a graphic image is output as a plan view of the hydraulic excavator. Additionally, a panorama image constituted by the composite overview image obtained as a result of performing processing by the image mixing unit 34 is combined with the display character 21. It is now assumed that the display character 21 and the panorama image have the same scale. The front camera image 22F is displayed at a position in front of the display character 21. Then, an image of an obstacle detected by the obstacle detector 33, i.e., an obstacle image S, is combined with this combined image. It is now assumed that the scale of the obstacle image S is substantially the same as that of the display character 21. The position of the obstacle image S is determined from the composite overview image, and the obstacle image S is displayed at the determined position.

The above-described image data is transmitted from the image processing apparatus 30 to the monitor 20. In the image display section 20a forming the monitor 20, the image data is displayed as a panorama image used for conducting surveillance around this working machine in a place at which the working machine is running. Accordingly, if a working person, a structure, etc., to be avoided exists around the working machine, the operator is able to accurately determine the presence of the person or the structure, together with the position or the size thereof, by visually checking the monitor 20, and is thus able to perform an operation necessary for the safety.

The upper swiveling body 3 of the working machine has a swiveling center, and has a swiveling radius around this swiveling center. Generally, the upper swiveling body 3 is able to swivel around 360 degrees. Accordingly, in the image display section 20a of the monitor 20, a circle based on the swiveling radius is drawn such that it is combined with a surveillance panorama image. For example, an area within the circle is set as a danger zone Z1 in which the working machine may be in danger of contacting an object to be avoided while swiveling the upper swiveling body 3. Moreover, as a range necessary for securing the safety, a circle having a predetermined radius is drawn outside the circle as the danger zone Z1, and the area between the two circles is set as an attention zone Z2. The outside of the attention zone Z2 is an area in which surveillance is not particularly necessary. The viewing angles of the lenses of the cameras 13R through 13L and the tilting angles *θ* of the optical axes with respect to the contact surface L are determined so that the area up to the attention zone Z2 is securely contained in the range of an image displayed on the monitor 20. In contrast, the area in front of the operator can be checked with the operator's naked eyes. Since the front camera 13F is provided for the purpose of securing an assisted view, the field of view of the front camera 13F is set in a direction different from those of the other cameras. In this embodiment, the field of view of the front camera 13F is set in the obliquely upward direction so that it can check the state of the bucket 12 forming the working mechanism 5 even if the bucket 12 is located at a high level.

The obstacle image S is combined with the surveillance panorama image and is displayed on the monitor 20. If the operator recognizes that this obstacle image S enters the attention zone Z2 by visually checking the monitor 20 in the cabin 4, the operator carefully performs an operation while paying attention to the object to be avoided, thereby making it possible to conduct safe and smooth work. If it is detected on the monitor 20 that the obstacle image S is located within the range of the danger zone Z1, the operator is able to take effective measures against collision, such as stopping the operation of the working machine, or issuing a warning to cause the object to move away if the object to be avoided is movable.

A view of an area in front of the working machine is ensured with the operator's naked eyes, and a view from the lateral positions to the back position of the working machine is obtained by checking the monitor 20. Additionally, the distance from the working machine to an object to be avoided can be almost precisely recognized by checking the monitor 20, and thus, even while running the working machine, the operator is able to look the monitor almost the entire working area including an area where the operator is unable to see directly. Accordingly, in addition to conducting safety check, it is very convenient for, for example, checking a range within the reach of the bucket 12, when conducting work, such as excavating landside, by using the working mechanism 5. Thus, the operability in conducting work using the working mechanism 5 is also improved.

A surveillance panorama image constituted by a composite overview image obtained by combining the above-described individual over view images 22B, 22L, and 22R is an image obtained as a result of performing coordinate transform on camera images and combining the resulting images, and does not necessarily accurately reflect the real situation around the machine. Although the obstacle image S is displayed on the monitor 20, it is not an object image but is a graphic image obtained by performing signal processing. Accordingly, it is more useful if the operator identifies the real image of an object to be avoided in terms of the safety check and the efficiency of work.

The individual over view images 22B, 22R, and 22L are images are originated from the respective cameras 13B, 13R, and 13L and the real image of the object to be avoided is obtained through the original camera images. Accordingly, respective original camera image obtained by one of the cameras 13B, 13R, and 13L can be displayed by superposing it on the surveillance panorama image displayed on the monitor 20.

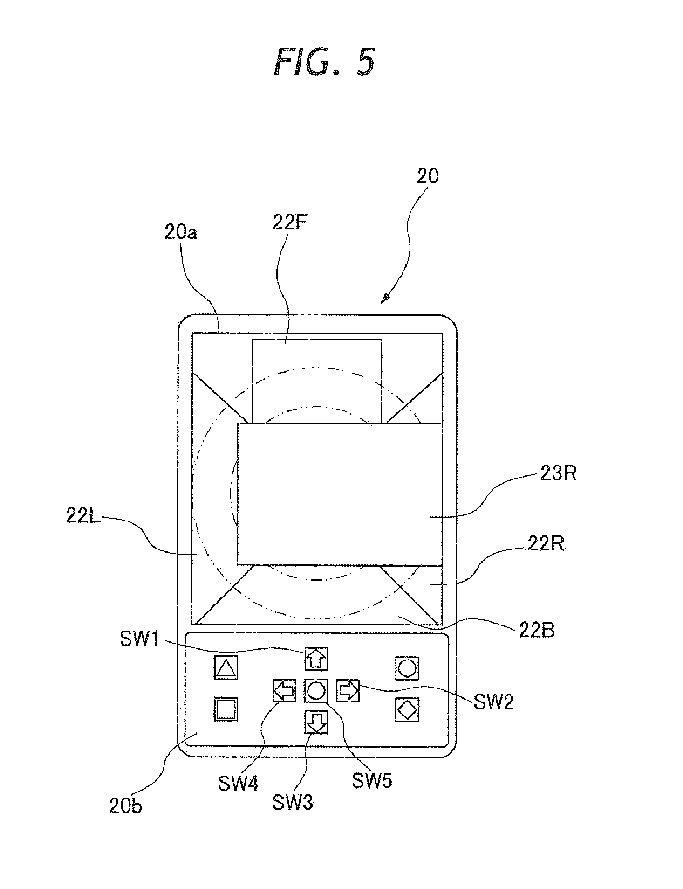

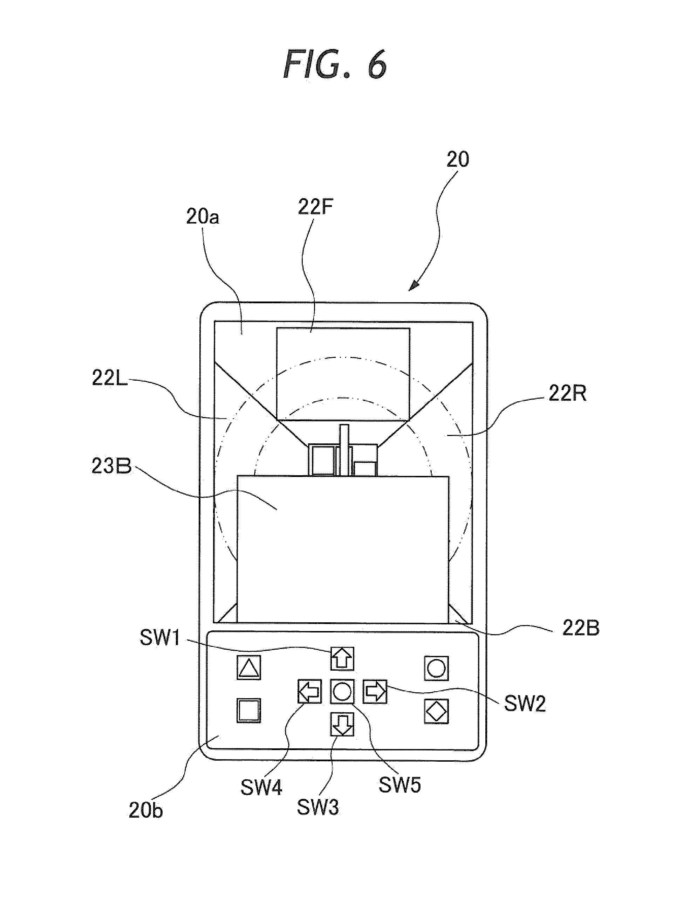

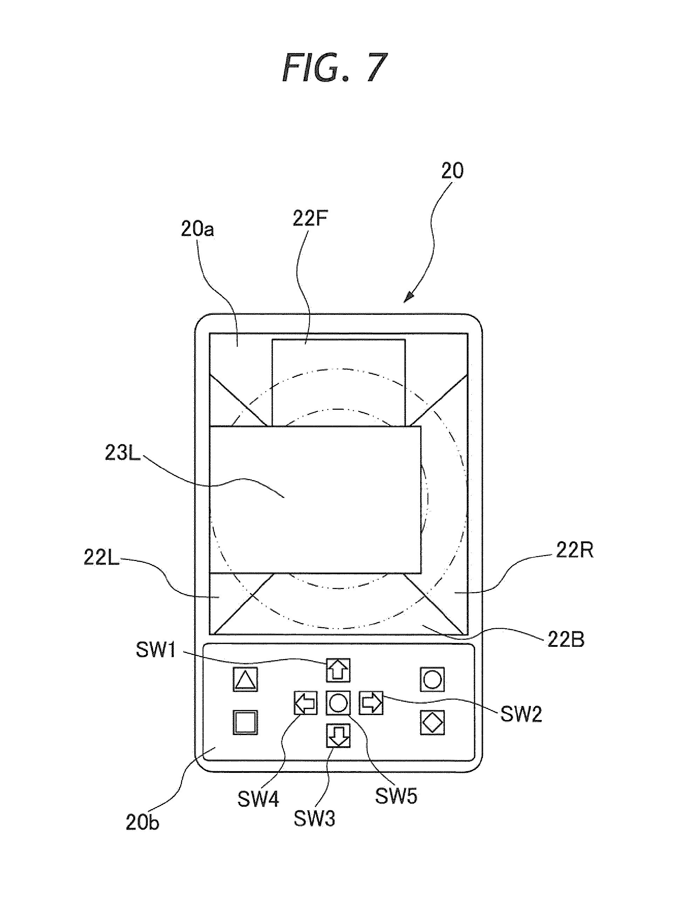

In order to implement this configuration, the operation panel section 20b is provided in a periphery of the operation display section 20a, i.e., in a portion serving as a frame of the operation display section 20a. Selection switches SW1 through SW5 are provided in the operation panel section 20b. The switch SW1 is used for displaying the front camera image 22F obtained by the front camera 13F in the image display section 20a in an enlarged size. The switch SW2 is used for, as shown in Fig. 5, displaying a right-side camera image 23R obtained by the right-side camera 13L in an enlarged size by superposing the right-side camera image 23R in and near a portion in which the right-side over view image 22R is displayed. The switch SW3 is used for, as shown in Fig. 6, displaying a back camera image 23B obtained by the back camera 13B in an enlarged size by superposing the back camera image 23B in and near a portion in which the back over view image 22B is displayed. The switch SW4 is used for, as shown in Fig. 7, displaying a left-side camera image 23L obtained by the left-side camera 13R in an enlarged size by superposing the left-side camera image 23L and near a portion in which the left-side over view image 22L is displayed. Moreover, the switch SW5 located at the center of the switches SW1 through SW4 is a return switch for returning one of the camera image display modes to the state in which the surveillance panorama image shown in Fig. 3 is displayed.

Thus, for example, when operating a lever for running operation (not shown) provided in the cabin 4 to run the working machine backward, the operator first conducts safety check concerning the back of the machine while the surveillance panorama image is being displayed on the monitor 20. If the obstacle image S is displayed at the back of the machine, the operator takes measures to avoid the obstacle. Then, if it is necessary to check the situation of the back of the machine, i.e., whether the ground is flat or uneven, whether there are ups and downs on the ground, or whether the ground is horizontally tilted, the operator operates the switch SW3 provided in the operation panel section 20b of the monitor 20.

With this operation, a back camera image is displayed in an enlarged size, as shown in Fig. 6, so that the operator can conduct safety check and understand the situation of the back of the vehicle. After checked the situation of the back of the vehicle, the operator operates the switch SW5 and the original surveillance panorama image is displayed in the image display section 20a of the monitor 20. If a working person or another vehicle crosses the path of the working machine while operating the working machine, the operator is able to recognize the working person or the vehicle and to take certain measures by stopping operating the machine or issuing a warning.

In the above-described embodiment, images are switched through a switching operation. Alternatively, the monitor 20 may be configured as a touch panel monitor. In this case, the operator touches a certain portion of the surveillance panorama image around the display character 21, and then, a camera image corresponding to the portion touched by the operator is displayed. An operator operating the working machine generally wears gloves, and thus, a monitor which is operable even if the operator wears gloves may have to be selected.

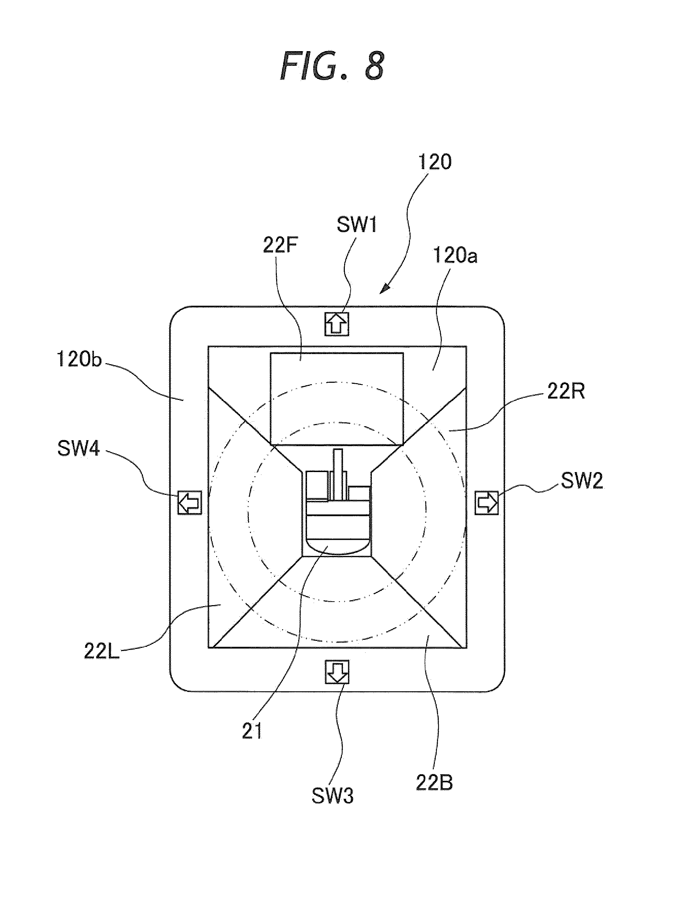

In a monitor 120, as shown in Fig. 8, a frame 120b having a substantially uniform width is formed around an image display section 120a. In this case, the switches SW1 through SW4 may be disposed at the middle positions of the associated sides of the frame 120b. Then, a camera image is displayed by operating one of the switches. When depressing a switch once, a camera image of the corresponding position may be displayed, and when depressing the switch twice, the original surveillance panorama image may be displayed. Since the components within the image display section 120a are the same as those shown in Fig. 3, they are designated by like reference numerals, and an explanation thereof will thus is omitted from the explanation.

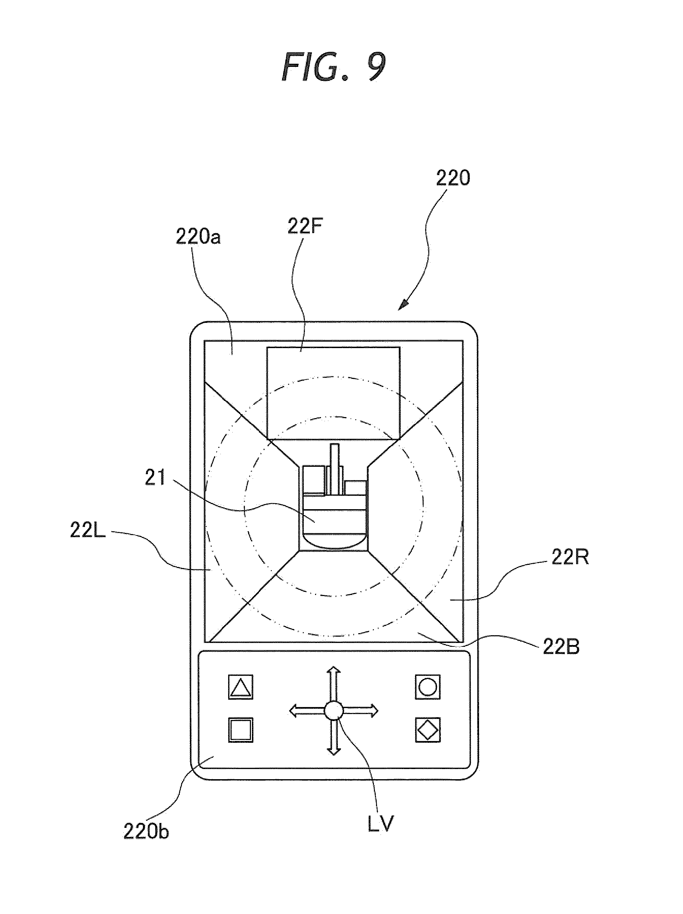

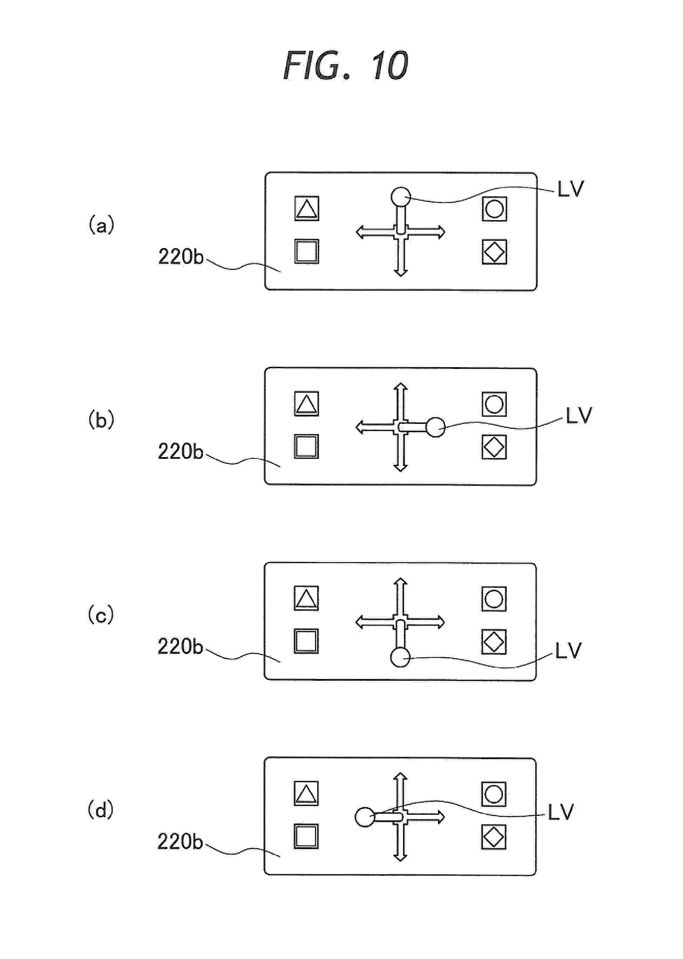

Further, as shown in Figs. 9 and 10, a lever LV which can be depressed with a finger is provided in an operation panel section 220b of a monitor 220. While the lever LV is in an upright position, as shown in Fig. 9, the original surveillance panorama image may be displayed. Since the components within an image display section 220a are the same as those shown in Fig. 3, they are designated by like reference numerals, and an explanation thereof is also omitted.

When the lever LV is tilted upward, as shown in Fig. 10(a), a front camera image is displayed in an enlarged size in the image display section 220a of the monitor 220. When the lever LV is tilted rightward, as shown in Fig. 10(b), a right-side camera image similar to that shown in Fig. 5 is displayed in an enlarged size. When the lever LV is tilted downwardly, as shown in Fig. 10(c), a back camera image similar to that shown in Fig. 6 is displayed in an enlarged size. When the lever LV is tilted leftward, as shown in Fig. 10(d), a left-side camera image similar to that shown in Fig. 7 is displayed in an enlarged size. The switching modes of the display content in the image display section 220a are similar to those shown in Figs. 5 through 7, which are the switching display modes of the monitor shown in Fig. 3.

When displaying a camera image obtained by one of the cameras 13B, 13R, and 13L from the state in which a surveillance panorama image is displayed, it is desirable to display the camera image as large as possible. Thus, a surveillance panorama image may be switched to an original camera image, and the camera image may be displayed in the entire screen of the monitor. In this case, in order to allow the operator to easily recognize in which direction of a camera image is being displayed, the monitor 120 shown in Fig. 8 may be used. In this case, when the display of one of the back, right-side, and left-side camera images is selected through the operation of the switches SW1 through SW4 provided on the corresponding sides of the frame 120b, the operated switch may emit light. This allows the operator to recognize the direction of a currently displayed camera image.

Moreover, when displaying a camera image by superposing it on a surveillance panorama image, only the camera image may be displayed at the superposed portion, and in this case, the surveillance panorama image may be seen through the camera image.

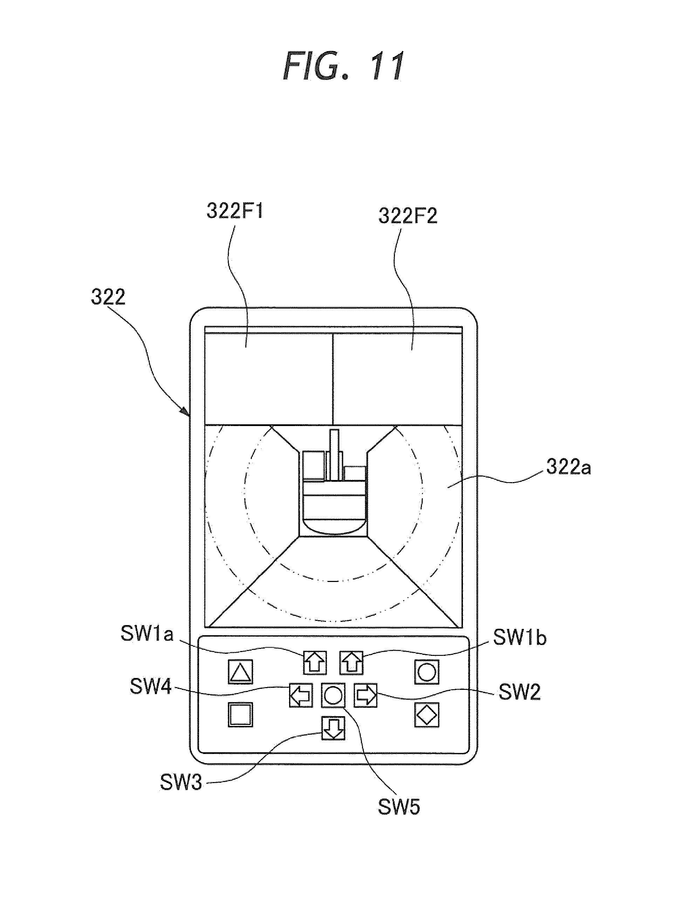

The front camera 13F is installed at the front position of the working machine such that the optical axis is directed obliquely upward. The front camera 13F may also be located at a position necessary to obtain an assisted view so that, for example, an excavating state by using the bucket 12 can be observed. The number of places where a front camera is installed is not restricted to one, but front cameras may be installed at a plurality of places. For example, two front cameras having a front view and an obliquely upward view may be provided. For example, when elevating the boom 10, one front camera brings the bucket 12 into view and the other front camera captures an image of the arm 11. In this case, it is desirable, as shown in Fig. 11, that front camera images 322F1 and 322F2 are disposed side by side in an image display section 320a of a monitor 320. In this case, since two front cameras are provided, six switches, i.e., switches SW1a and SW1b and the switches SW2 through SW5, are provided in an operation panel section 320b so that either of the front camera images 322F1 and 322F2 can be displayed in an enlarged size.

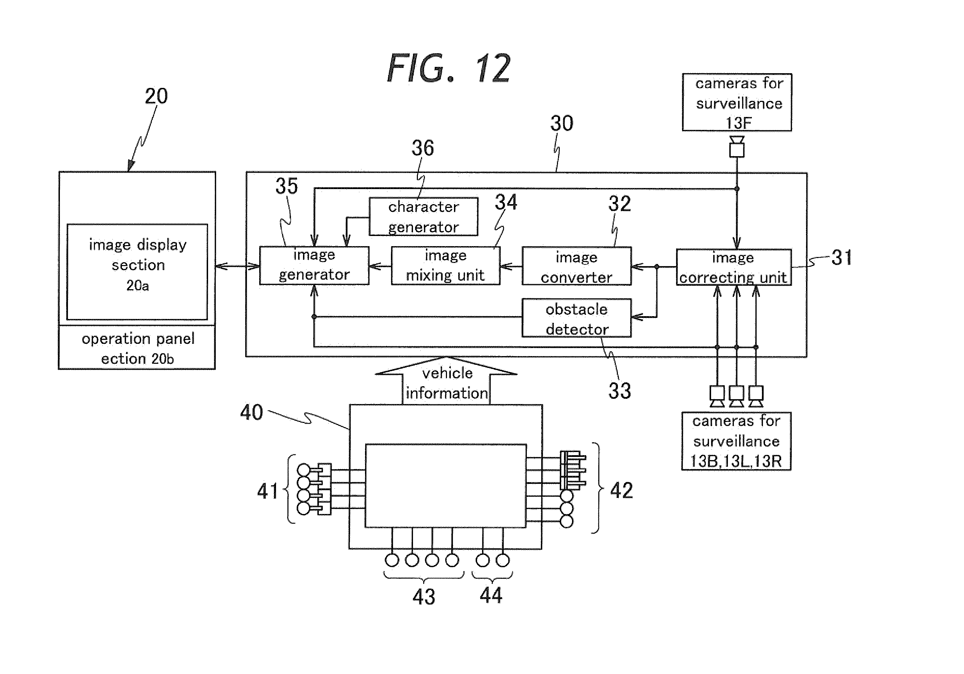

In the foregoing embodiments, the switching of images is performed through a manual operation. However, the switching of images may be performed in cooperation with the operation of an operation lever. In order to implement this, as shown in Fig. 12, a vehicle controller 40 is connected to the image processing apparatus 30 shown in Fig. 4, and among items of information obtained from various sensors, etc., an item of information necessary for an automatic switching operation is input from this vehicle controller 40 into the image processing apparatus 30, thereby controlling an operation of the display image generator 35, etc., of this image processing apparatus 30.

As is known, an operation signal from an operation lever is input into the vehicle controller 40. For example, as shown in Fig. 12, a plurality of levers can be provided in the cabin 4 to be operated by an operator. In the drawing, these operation levers are collectively denoted by reference numeral 41. When one of the operation levers 41 is operated, the corresponding one of actuators denoted by 42 and constituted by hydraulic cylinders or hydraulic motors is moved. The angles of the boom 10, the arm 11, and the bucket 12 and the swiveling angle of the swiveling unit 2 are detected by corresponding angle detectors denoted by 43, and the running speed and the swiveling speed are detected by corresponding speed detectors denoted by 44. The configurations and the operations of these components are known, and thus, a detailed explanation and drawings thereof will be omitted.

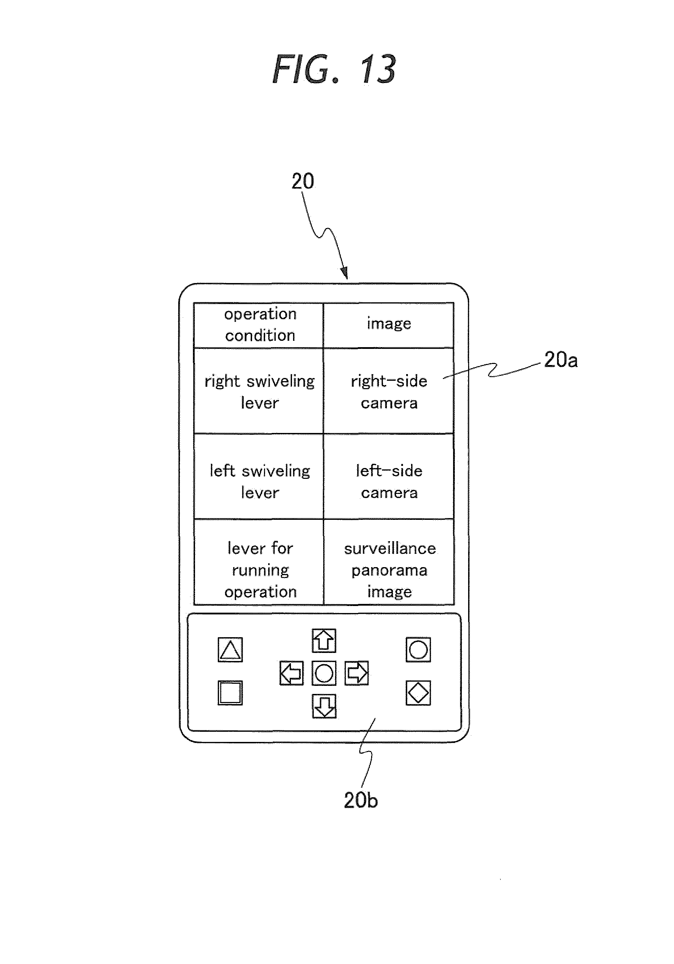

A setting concerning under which situation automatic switching is performed and which part of an over view image is converted into a camera image may be set on the screen of the monitor 20. A setting screen, such as that shown in Fig. 13, may be used. More specifically, a menu screen is read in the image display section 20a of the monitor 20, and a condition indicating which operation lever is to be operated to automatically switch a screen, and a screen to be switched, and more specifically, which part of a surveillance panorama image is to be switched, are displayed.

It is now assumed that the setting screen is set, as shown in Fig. 13. In this state, when a right swiveling lever is operated, a surveillance panorama image is switched to a camera image obtained by the right-side camera 13R, and when a left swiveling lever is operated, a surveillance panorama image is switched to a camera image obtained by the left-side camera 13L. Further, when a lever for running operation is operated, no matter whatever image obtained as a result of an automatic operation or a manual operation is displayed, it is switched to a surveillance panorama image. If an operation lever is returned to a neutral position after displaying a camera image, the camera image is switched to the original surveillance panorama image. Reference Signs Lists

- 1: base carrier
- 3: upper swiveling body
- 4: cabin
- 5: working mechanism
- 6: machine housing
- 7: counterweight
- 10: boom
- 11: arm
- 12: bucket
- 13B: back camera
- 13L: left-side camera
- 13R: right-side camera
- 13F: front camera
- 20, 120, 220, 320: monitor
- 20a, 120a, 220a, 320a: image display section
- 20b, 220b, 320b: operation panel section
- 21: display character
- 22B: back over view image
- 22L, 22R: side over view image
- 22F: front camera image
- 23B, 23L, 23R: camera image
- 30: image processing apparatus
- 31: image correcting unit
- 32: image converter
- 33: obstacle detector
- 34: image mixing unit
- 35: display image generator
- 36: character generator
- 40: vehicle controller

## Claims

1. A device for surveying surround of a working machine provided a plurality of cameras on said working machine, directions of respective camera views being adapted to convert by means of signal processing of respective camera images from top to downward direction to produce over view images on a a monitor display, said device comprising:
an image mixing unit to produce a composite over view images from individual over view images to show on said monitor display attained by said cameras: and
at least one switch to show on said monitor display at least one original camera image from one taken by one of cameras in place of one or more individual over view image.

2. A device for surveying surround of a working machine as set forth in claim 1, wherein said cameras include a back camera to take an image of a view at the back-ward of said working machine and two side-ward cameras to take an image of a view on the left side-ward of said working machine and an image of a view on the right side-ward of said working machine, and said monitor display being shown as a graphic image of a plan view of said working machine as a illustrated character on said monitor display, together with said composite over view image obtained as a result of mixing of said individual over view images consisting of a back over view image located at a back position based on the camera image obtained by the back camera and left-side and right-side over view images located at a left-side position and a right-side position based on the camera images obtained by the left-side and right-side cameras, respectively as a surveillance panorama image around said graphic image of said working machine.

3. A device for surveying surround of a working machine as set forth in claim 1, wherein a front camera having a viewing range of the front of said working machine is further provided, and a camera image of said front camera is displayed on said monitor display instead of being combined by using image mixing unit.

4. A device for surveying surround of a working machine as set forth in claim 1, wherein said camera image superposedly shown on said individual over view image, when converting one of said individual over view images specified by said image change-over switch into a camera image.

5. A device for surveying surround of a working machine as set forth in claim 1 to 4, wherein said monitor display includes an image display section and an operation panel section, and said switch comprising a t operation panel section.

6. A device for surveying surround of a working machine as set forth in claim 1 to 4, wherein said monitor display having a touch panel monitor, and said switch is provided in a display section of monitor display,

7. A device for surveying surround of a working machine as set forth in claim 1 to 4, wherein said switch being change-over in cooperation with an operation unit of said working machine.
